# EUROPÄISCHE PATENTSCHRIFT

(11) **EP 4 012 197 B1**
(45) Veröffentlichungstag und Bekanntmachung des Hinweises auf die Patenterteilung: **22.10.2025**
(21) Anmeldenummer: 21212529.8
(22) Anmeldetag: 06.12.2021
(51) Int. Cl.: F16B 2/22, F16B 2/24, E06B 3/667

(54) **STECKVERBINDER UND STECKVERBINDUNG**
CONNECTOR AND CONNECTION
CONNECTEUR ENFICHABLE ET CONNEXION ENFICHABLE

(30) Priorität: 09.12.2020 DE 202020107095 U
(43) Veröffentlichungstag der Anmeldung: 15.06.2022
(73) Patentinhaber: Kronenberg, Ralf M., 42781 Haan / Rhld (DE)
(72) Erfinder: Kronenberg, Ralf M., 42781 Haan / Rhld (DE)
(74) Vertreter: ERNICKE Patent- und Rechtsanwälte PartmbB

(56) Entgegenhaltungen:
- EP-A1- 1 678 404
- EP-A2- 1 785 575
- US-A1- 2008 253 112

## Beschreibung

Die Erfindung betrifft einen geraden Steckverbinder für Hohlprofile, insbesondere Warm-Edge-Hohlprofile, von Abstandshaltern einer Isolierverglasung sowie eine Steckverbindung mit den Merkmalen im Oberbegriff der selbstständigen Ansprüche.

Ein solcher gerader Steckverbinder ist aus der EP 1 785 575 A2 bekannt. Der im Querschnitt im Wesentlichen U-förmige Steckverbinder weist offene Stirnseiten und einen in Einbaustellung zum Scheibeninnenraum weisenden Boden mit randseitig anschließenden und im Querschnitt profilierten Seitenwänden nebst einem Mittenanschlag auf. Die profilierten Seitenwände sind jeweils in der Höhe in mehrere Seitenwandbereiche gegliedert und weisen an ihrem freien Randbereich Rückhalteelemente in Form von in der Seitenwandebene abstehenden Zahnleisten auf. Die Querschnittprofilierung der Seitenwände ist als Hammerkopfprofil ausgeführt, wobei im Anschluss an den Boden jeweils eine in der Querschnittskontur rechteckige Ausbauchung mit geraden Wandbereichen und scharf gekrümmten Übergängen bzw. Kanten vorhanden ist. Die profilierten Seitenwände sind in Axialrichtung durch mehrere trennende Einschnitte unter Bildung von Federbrücken unterbrochen. Die untere rechteckige Ausbauchung ist formsteif. Die Federbrücken können dank ihrer Trennung federnd nachgeben und ermöglichen eine Toleranzaufnahme in der Höhe für die aufgesteckten Hohlprofile.

Die WO 2016/079220 A1 zeigt eine Variante eines solchen im Querschnitt hammerkopfförmigen Steckverbinders mit einem unteren und im Querschnitt rechteckigen Seitenwandbereich. Dieser Steckverbinder hat eine erhöhte Steifigkeit und ist für geschweißte Hohlprofile vorgesehen.

Aus der WO 2005/040538 A1 bzw. EP 1 678 404 A1 ist ein Steckverbinder mit einer Querschnittsgeometrie in einer Omega-Form bekannt. Diese hat die typische Omega-Rundungsform, wobei eine vom Boden ausgehende, seitlich ausbauchende Rundung an einem unteren Seitenwandbereich direkt in eine einbauchende Rundung am anschließenden Seitenwandbereich übergeht.

Die US 2008/0253112 A1 zeigt eine Handlaufschiene mit einer unteren offenen Montagenut, in die Spreizhalterungen zur Befestigung von Beleuchtungshaltern oder Wandmontageelementen eingesteckt werden können.

Es ist Aufgabe der Erfindung, einen verbesserten Steckverbinder nebst einer Steckverbindung aufzuzeigen.

Die Erfindung löst diese Aufgabe mit den Merkmalen in den selbstständigen Ansprüchen.

Der beanspruchte gerade Steckverbinder weist einen unteren Seitenwandbereich mit einer ausbauchenden und gerundeten Form auf, der an den Boden des Steckverbinders randseitig, z.B. tangential, anschließt. Die Ausbauchung ist zur Außenseite des Steckverbinders gerichtet. Dieser gerundete Seitenwandbereich besitzt eine weiche Rundung mit einem großen Krümmungsradius. An den unteren, gerundeten Seitenwandbereich schließt mit einem Übergang und einer scharfen Krümmung ein zweiter zur Verbinderinnenseite einspringender Seitenwandbereich an. An diesen schließt endseitig über eine Kante ein dritter aufrechter Seitenwandbereich an. Die scharfe Krümmung am Übergang zwischen dem ersten und dem zweiten Seitenwandbereich hat einen wesentlich kleineren Krümmungsradius als die weiche Rundung des unteren Seitenwandbereichs. Die gebogene Kante zwischen dem einspringende und dem aufrechten Seitenwandbereich kann ebenfalls einen solchen kleinen Krümmungsradius wie der Übergang haben. Die scharfe(n) Krümmung(en) kann/können die jeweilige Seitenwand stabilisieren.

Der einspringende Seitenwandbereich ist bevorzugt parallel oder schräg zum Boden ausgerichtet. Er kann eine gerade Erstreckung haben. Der aufrechte und bevorzugt gerade Seitenwandbereich kann sich z.B. senkrecht zum Boden erstrecken. Der Übergang und die gebogene Kante können voneinander abgesetzt und distanziert sein. Der dazwischen liegende, einspringende Seitenwandbereich hat eine wesentlich schwächere Krümmung als der Übergang und die gebogene Kante.

Diese Querschnittsgestaltung der profilierten Seitenwände mit der unteren weichen Rundung und der anschließenden scharfen Krümmung hat Vorteile für die Qualität und die Anpassbarkeit des Steckverbinders an die beidseits aufgesteckten Hohlprofile oder Hohlprofilenden eines Abstandshalters. Das oder die Hohlprofile können als wärmedämmende Warm-Edge-Hohlprofile ausgebildet sein.

Dank der weichen Rundung kann der Steckverbinder zur Höhenanpassung und Toleranzaufnahme weicher und besser federn. Die scharfe Krümmung des Übergangs und ggf. auch der Kante stabilisiert dabei die Geometrie des zweiten und des dritten Seitenwandbereichs. Der einspringende Seitenwandbereich kann ebenfalls eine gewisse Federelastizität in Höhenrichtung des Steckverbinders haben. Bei einer Höhenanpassung und Toleranzaufnahme sowie Verformung behält der Steckverbinder seine BasisGeometrie. Insbesondere werden Veränderungen und Verschiebungen der Kontakt- und Eingriffstellen des Steckverbinders am aufgesteckten Hohlprofil vermieden oder zumindest minimiert.

Der Krümmungsradius der weichen Rundung ist um ein bevorzugt ganzzahliges Mehrfaches größer als der Krümmungsradius des Übergangs und seiner scharfen Krümmung. Er kann z.B. mehr als 5-fache größer sein. Dies erlaubt eine federnde Nachgiebigkeit im unteren gerundeten und ausbauchenden Seitenwandbereich. Die federnde Nachgiebigkeit kann in der Höhe und/oder zur Seite bestehen. Der federnd nachgiebige Seitenwandbereich kann die Toleranzaufnahme und die Wirkung der federnden Rückhalteelemente am freien oberen Randbereich der betreffenden Seitenwand unterstützen.

Dies ist besonders günstig für Warm-Edge-Hohlprofile, die sich dadurch nicht in unerwünschter Weise verformen. Solche Warm-Edge-Hohlprofile können z.B. aus dünnen Edelstahlblechen oder aus einer Kombination von Kunststoff und Metall, insbesondere Edelstahl, bestehen. Solche Verbundprofile werden auch als Hybridprofile bezeichnet. Durch die verformungsarme Toleranzaufnahme des beanspruchten Steckverbinders können die Hohlprofilenden an ihrer Stirnseite und Verbindungs- und Stoßstelle über dem Steckverbinder exakt und passgenau zusammentreffen. Dies hat Vorteile für das optische Aussehen und für die Dichtigkeit der Verbindungsstelle.

Die weiche ausbauchende Rundung des unteren Seitenwandbereichs kann z.B. eine Kreisbogenform oder eine ellipsenähnliche Form haben. Der Bogenwinkel kann z.B. ca. 90° betragen. Dies ist einerseits günstig für die besagte Federwirkung und die Aufnahmefähigkeit von Höhentoleranzen des Steckverbinders und des Hohlprofils. Andererseits können sich auch Vorteile für eine Toleranzaufnahme in der Breite bzw. Weite des Steckverbinders und des Hohlprofils ergeben. Der Steckverbinder kann bei einem Einfedern zur Höhenanpassung ggf. auch seine Weite vergrößern.

Der untere ausbauchende Seitenwandbereich kann an seiner weich gerundeten Außenseite, insbesondere im Scheitelbereich, eine z.B. über die Verbinderlänge durchgehend glatte Wandfläche aufweisen. Dies ist günstig für ein leichtes, widerstandsarmes und beschädigungsfreies Aufstecken eines Hohlprofils oder Hohlprofilendes. Ferner kann sich eine weiche und störungsarme Anlage an der Seitenwand des Hohlprofils ergeben.

Der untere Seitenwandbereich kann ein gerades und aufrecht, insbesondere senkrecht zum Boden, erstrecktes Zwischenstück zwischen der weichen Rundung und dem gekrümmten Übergang aufweisen. Dieses kann sich ggf. vorteilhaft und dicht an eine ggf. parallele und aufrechte Innenwand des Hohlprofils anlegen. Das gerade Zwischenstück ist in seiner Erstreckungslänge bevorzugt deutlich kleiner als die Bogenlänge der weichen Rundung.

Das gerade Zwischenstück hat verschiedene Vorteile. Es ermöglicht eine Entkoppelung der Form und Abmessungen der weichen Rundung am unteren Seitenwandbereich vom Höhenabstand des zweiten und einspringenden Seitenwandbereichs gegenüber dem Boden des Steckverbinders. Die Länge des geraden Zwischenstücks und die Form sowie Abmessung der weichen Rundung können eigenständig und unabhängig voneinander bedarfsweise eingestellt und variiert werden.

Die Federeigenschaften und die seitliche Ausbauchungsweite der weichen Rundung können unabhängig von diesem Höhenabstand eingestellt werden. Die Zwischenstücklänge kann entsprechend angepasst werden. Auch das vom Rundungsscheitel bestimmte Breitenmaß des Steckverbinders ist unabhängig von dem besagten Höhenabstand veränderbar. Das Höhenmaß und das Breitenmaß des Steckverbinders können unabhängig voneinander verändert werden. Die gewünschten lokalen Federeigenschaften der weichen Rundung und Versteifungseigenschaften der scharfen Krümmungen können dabei beibehalten werden. Der Steckverbinder kann hinsichtlich seiner Maße und seiner Feder- und Versteifungseigenschaften eingestellt und optimiert werden. Die gewünschte Lage der Kontakt- und Eingriffstellen des Steckverbinders am aufgesteckten Hohlprofil kann auch bei Veränderung der Abmessungen des Steckverbinders beibehalten werden.

Bei der bekannten Omega-Form von Steckverbindern hat hingegen eine Änderung des Höhenmaßes auch eine Veränderung des Breitenmaßes und umgekehrt oder eine substanzielle Änderung der Basisgeometrie zur Folge. Zudem werden bei einer Maßänderung die Federeigenschaften sowie die Lage der Kontakt- und Eingriffstellen des Steckverbinders am aufgesteckten Hohlprofil verändert.

Der untere gerundete und ausbauchende Seitenwandbereich kann in seiner Axialrichtung unterbrechungsfrei ausgebildet sein. Der einspringende zweite Seitenwandbereich kann ebenfalls in seiner Axialrichtung eine unterbrechungsfreie Ausbildung haben. Diese Gestaltung hat Vorteile für die Stabilität und die Dichtigkeit des Steckverbinders. Ein im hohlen Innenraum des Steckverbinders ggf. eingefülltes granuliertes Trocknungsmittel wird an einem Austritt nach außen gehindert. Zudem hat der Steckverbinder in seiner Axialrichtung eine erhöhte Steifigkeit und kann Biegebelastungen schadenfrei aufnehmen, die bei der Herstellung des Abstandhalterrahmens und der Isolierverglasung auftreten können. Die Verbindungsstelle und die Steckverbindungen zwischen dem Steckverbinder und den beidseits aufgesteckten Hohlprofilenden wird mechanisch stabilisiert. Diese Stabilisierung ist trotz der federnden weichen Rundung und der Toleranzaufnahme möglich.

Der Steckverbinder kann eine besondere und eigenständig erfinderische Ausbildung der Rückhalteelemente am freien Randbereich der Seitenwände, insbesondere am dritten aufrechten Seitenwandbereich, haben. Dadurch sind jeweils mehrere federnde Rückhalteelemente in einer Längsachse des Steckverbinders hintereinander aufgereiht. Die Rückhalteelemente sind jeweils schräg von der Seitenwand nach außen gebogen und weisen zur Verbindermitte. Sie haben in der Seitenansicht eine rechteckige Plattenform mit einer senkrecht zum Boden erstreckten Vorderkante.

Diese Vorderkantenerstreckung ist besonders günstig für eine schadensfreie und trotzdem wirksame und nachhaltige Rückhaltefunktion beim Kontakt der Vorderkanten mit der zugewandten Innenseite oder Innenwand des Hohlprofils bzw. Hohlprofilendes. Dies ist besonders günstig für aufrechte Wandbereiche des Hohlprofils oder für einen übergehenden Eck- oder Anschlussbereich zwischen Profildach und einem bevorzugt eingezogenen oberen Seitenwandbereich des Hohlprofils bzw. Hohlprofilendes. Die Vorderkante kann linienförmig an der Innenwand anliegen und kann sich bei Auftreten von Auszugkräften nachhaltig und trotzdem schonend an den Innenwand verkrallen und ein Abziehen des Hohlprofilendes verhindern. Bei verformungsempfindlichen Hohlprofilen, insbesondere Warm-Edge-Hohlprofilen, hat ein solcher linienförmiger Vorderkantenkontakt besondere Vorteile.

Diese eigenständig erfinderische Ausbildung eines Steckverbinders und seiner Rückhalteelemente kann auch bei anderen Steckverbindern mit Vorteil eingesetzt werden, die nicht die vorgenannte Seitenwandprofilierung mit der weichen Rundung, der scharfen Krümmung und der Kante an den Seitenwandbereichen aufweisen. Insbesondere kann diese Gestaltung der Rückhalteelemente auch bei den eingangs genannten Steckverbindern mit einer Hammerkopfform und rechteckigen Ausbauchungen haben.

Ein solcher gerader Steckverbinder für Hohlprofile, insbesondere Warm-Edge-Hohlprofile, von Abstandshaltern einer Isolierverglasung, kann einen im wesentlichen U-förmigen Querschnitt mit offenen Stirnseiten und einen in Einbaustellung zum Scheibeninnenraum weisenden Boden sowie randseitige, im Querschnitt profilierte Seitenwänden und eine Mittenfindung umfassen, wobei die Seitenwände jeweils in der Höhe in mehrere Seitenwandbereiche gegliedert sind und an ihrem freien Randbereich jeweils federnde Rückhalteelemente aufweisen, wobei der Steckverbinder im Querschnitt eine Hammerkopfform mit beidseitigen rechteckigen Ausbauchungen aufweist und wobei die mehreren federnden Rückhalteelemente in einer Längsachse des Steckverbinders hintereinander aufgereiht sind, wobei die Rückhalteelemente seitlich schräg nach außen und zu einer Verbindermitte weisend gebogen sind und in der Seitenansicht eine rechteckige Plattenform mit einer senkrecht zum Boden erstreckten Vorderkante aufweisen.

In einer vorteilhaften Weiterbildung können diese eigenständig erfinderischen Rückhalteelemente Unterkanten und Oberkanten aufweisen, die sich jeweils bevorzugt parallel zum Boden des Steckverbinders erstrecken. Dies ist günstig für die Federbewegung der von der Seitenwand ausgebogenen oder dort angeformten Rückhalteelemente. Sie können um eine aufrechte Biegelinie oder Anschlusslinie federn. Hierbei kann der vorteilhafte Kontakt der aufrechten Vorderkanten mit dem Hohlprofil erhalten bleiben.

Günstig sind außerdem eine Verrundung am jeweiligen Anschluss der Vorderkante an die Oberkante und eine vorspringende Nase am jeweiligen Anschluss der Vorderkante an die Unterkante der Rückhalteelemente. Die Verrundung ist für das widerstandsarme Einschieben des Steckverbinders in das Hohlprofil von Vorteil. Die vorspringende Nase verbessert den Rückhalt und die Auszugsfestigkeit des Steckverbinders im Hohlprofil.

In einer besonders vorteilhaften Ausgestaltung kann der Steckverbinder beidseits der Verbindermitte an den Seitenwänden Rückhalteelemente aufweisen, deren Unterkanten einen unterschiedlichen Abstand vom Boden des Steckverbinders aufweisen. Sie können auch einen unterschiedlichen Abstand vom einspringenden Seitenwandbereich aufweisen, wenn der Steckverbinder eine Ausbildung gemäß Anspruch 1 hat.

Ferner kann der Steckverbinder beidseits der Verbindermitte an den Seitenwänden jeweils Rückhalteelemente aufweisen, deren Oberkanten einen unterschiedlichen Abstand vom Boden des Steckverbinders oder vom besagten einspringenden Seitenwandbereich aufweisen.

In einer weiteren alternativen oder zusätzlichen Ausgestaltung kann der Steckverbinder beidseits der Verbindermitte an den Seitenwänden jeweils Rückhalteelemente aufweisen, deren Vorderkanten eine unterschiedliche Länge aufweisen.

Diese verschiedenen einzeln oder in Kombination vorhandenen Ausgestaltungen der Rückhalteelemente haben Vorteile für eine Anpassung der Rückhalteelemente an die Hohlprofile, insbesondere wenn diese verformungsempfindlich sind und z.B. als Warm-Edge-Hohlprofile ausgebildet sind. Durch eine Veränderung der besagten Oberkantenabstände, Unterkantenabstände und Vorderkantenlängen können die Rückhalteelemente unterschiedliche Angriffsstellen an der Innenwand der aufgesteckten Hohlprofilenden haben. Außerdem können die Rückhalteelemente unterschiedliche Federeigenschaften und ggf. auch Rückhalteeigenschaften haben.

Insbesondere können die Vorderkanten der jeweils am nächsten zur Verbindermitte angeordneten Rückhalteelemente und der jeweils am nächsten zur Stirnseite des Steckverbinders angeordneten Rückhalteelemente eine kleinere Vorderkantenlänge als die ein oder mehreren dazwischen angeordneten Rückhalteelemente aufweisen. Die kleinere Vorderkantenlänge korreliert mit einer kleineren Länge der Biege- und Anschlussstelle an den aufrechten Seitenwandbereich. Die betreffenden Rückhalteelemente können eine größere Biegeweichheit haben. Dies hat Vorteile beim anfänglichen Aufstecken eines Hohlprofilendes und beim nachfolgenden Erreichen der Verbindermitte.

Ferner ist es günstig, wenn die Oberkante des jeweils am nächsten zur Stirnseite des Steckverbinders angeordneten Rückhalteelements einen kleineren Abstand vom Boden oder vom einspringenden Seitenwandbereich aufweist als die anderen in der Reihe zur Verbindermitte folgenden Rückhalteelemente. Diese folgenden Rückhalteelemente können mit ihrer Oberkante in Kontakt mit der Dachwand des aufgesteckten Hohlprofilendes kommen und evtl. eine Toleranzaufnahme und Höhenanpassung bewirken. Dies erfolgt zeitlich und örtlich versetzt gegenüber dem anfänglichen Aufstecken des Hohlprofilendes und wirkt sich ebenfalls günstig auf eine Verformungsvermeidung für das Hohlprofil aus. Durch den Versatz lässt sich das Hohlprofilende insgesamt besser und sicherer aufstecken. Dies hat Vorteile bei einem manuellen und insbesondere auch bei einem maschinellen und automatischen Aufstecken.

In einer weiteren vorteilhaften Ausgestaltung hat die Unterkante des jeweils am nächsten zur Verbindermitte angeordneten Rückhalteelements einen größeren Abstand vom Boden des Steckverbinders oder vom einspringenden Seitenwandbereich als die Unterkante der anderen Rückhalteelemente. Hierdurch können die Seitenwände und der Steckverbinder im Bereich der Verbindermitte eine größere Steg- oder Seitenwandhöhe und eine höhere Biegesteifigkeit haben. Dies ist günstig bei statischen und dynamischen Belastungen, die bei der Herstellung der Abstandhalter und bei deren Handhabung bei der Bildung der Isolierverglasung haben.

Die Unterkanten des jeweils am nächsten zur Stirnseite des Steckverbinders angeordneten Rückhalteelements und des oder der in Richtung zur Verbindermitte nächstfolgenden Rückhalteelements können im Wesentlichen den gleichen Abstand vom Boden oder vom einspringenden Seitenwandbereich aufweisen. Das vorgenannte, am nächsten zur Verbindermitte angeordnete Rückhalteelement kann dabei den besagten größeren Abstand vom Boden oder vom einspringenden Seitenwandbereich haben. Bei dieser Abstandsgestaltung ergeben sich Vorteile für eine gleichmäßige Seitenwandbelastung der Hohlprofile und eine nachhaltige Rückhaltefunktion.

Ferner ist es günstig, wenn die jeweils beidseits der Verbindermitte an den Seitenwänden jeweils angeordneten Rückhalteelemente einen axialen Abstand untereinander und einen Freiraum zwischen sich aufweisen. Die Seitenwände können beidseits der Verbindermitte jeweils eine axiale Reihe von drei, vier oder mehr Rückhalteelementen aufweisen. Dies ist günstig für die vorerwähnten Variationen der Rückhalteelemente und ihrer Effekte.

Der gerade Steckverbinder kann zwei an die Verbindermitte anschließende und fluchtende Verbinderschenkel haben. An diesen Verbinderschenkeln können die jeweils linken und rechten Seitenwände und deren Rückhalteelemente die gleiche vorgenannte Ausbildung haben.

Die vorgenannten Richtungsangaben parallel und senkrecht zum Boden des Steckverbinders können einen Toleranzbereich haben.

In einer ebenfalls eigenständigen Ausgestaltung kann der Steckverbinder am Boden beidseits der Verbindermitte jeweils ein oder mehrere federnde Rückhaltezungen aufweisen, die schräg nach außen gebogen sind und zur Verbindermitte weisen. Die bodenseitigen Rückhaltezungen verkrallen sich am Profilboden des aufgesteckten Hohlprofilendes. Sie können die Rückhalteelemente am freien Randbereich der Seitenwände vorteilhaft unterstützen und ergänzen.

In einer weiteren Ausgestaltung können die Seitenwände an ihren stirnseitigen Enden jeweils eine in Richtung vom Boden zum freien Randbereich ansteigende Anlaufschräge aufweisen. Diese kann an einem einspringenden Seitenwandbereich enden. Die Anlaufschräge erleichtert das Aufstecken eines Hohlprofilendes und stabilisiert auch den Steckverbinder.

Der Steckverbinder weist eine Mittenfindung auf, die in unterschiedlicher Weise ausgebildet sein kann. In einer bevorzugten Ausführungsform weist diese beidseits der Verbindermitte angeordnete und gegeneinander gerichtete federnde Anschlagnasen auf. Diese Anschlagnasen können die gleiche Rechteckform und Gestaltung wie die jeweils zur Stirnseite des Steckverbinders nächstfolgenden Rückhalteelemente haben. Die Mittenfindung kann in einer anderen Ausführungsform von einem Festanschlag, versetzten Diagonalanschlägen oder von anderen Anschlagelementen gebildet werden.

Der Steckverbinder hat vorteilhafterweise offene Stirnseiten und einen axial durchgängigen inneren Hohlraum. Ein in dem oder den Hohlprofilen befindliches granuliertes Trocknungsmittel kann durch den hohlen Steckverbinder und über die Verbindungsstelle der Hohlprofilenden hinweg fließen.

Der beanspruchte Steckverbinder kann aus einem beliebig geeigneten Material in beliebig geeigneter Weise hergestellt werden. Besondere Vorteile bestehen bei einer Ausbildung des Steckverbinders als Stanz- und Biegeteil aus einem metallischen Blech, insbesondere aus einem verzinkten Stahlband. Alternativ ist eine Ausbildung aus Kunststoff oder aus einem Verbundwerkstoff, insbesondere Metall und Kunststoff, möglich. Eine Fertigung als Gussteil oder Spritzgussteil ist möglich.

Bei der Steckverbindung kann der Steckverbinder derart in ein Hohlprofil bzw. Hohlprofilende eines Abstandhalters eingesteckt werden, dass der Boden des Steckverbinders an einem zum Innenraum der Isolierverglasung weisenden Profilboden des Hohlprofils angeordnet ist. Der im Bereich der Verbindungsmitte nicht unterbrochene Boden überbrückt dadurch die Verbindungsstelle der Hohlprofilenden.

Das Hohlprofil kann in unterschiedlich geeigneter Weise ausgebildet sein und aus unterschiedlichen Materialien bestehen. In einer vorteilhaften Ausgestaltung ist es mehrteilig ausgebildet und weist ein Profilteil aus Kunststoff sowie ein Profilteil aus Metall, insbesondere aus Edelstahl, auf. Das metallische Profilteil kann dünnwandig oder folienartig ausgebildet sein. Es kann schalenartig am Dach- und seitenwandbereich des Hohlprofils angeordnet sein. Eine solche Ausgestaltung ist zur Bildung eines Warm-Edge-Hohlprofils von Vorteil. Alternativ kann ein Hohlprofil vollständig aus Kunststoff oder aus Metall, insbesondere Stahl oder Leichtmetall, bestehen.

Das Hohlprofil kann einen vorzugsweise geschlossenen Umfang mit einem Profilboden, seitlichen Profilwänden und einem Profildach aufweisen. Günstig ist ein z.B. einwärts gewölbter Eck- oder Anschlussbereich zwischen dem Profildach und einem bevorzugt eingezogenen oberen Bereich der angrenzenden Seitenwand. Die federnden Rückhalteelemente am freien Randbereich der Seitenwände können an dem Eck- oder Anschlussbereich wirksam und bevorzugt mehrachsig in Eingriff mit dem Hohlprofil treten.

In den Unteransprüchen sind weitere vorteilhafte Ausgestaltungen der Erfindung angegeben.

Der beanspruchte Steckverbinder und die beanspruchte Steckverbindung können folgende Ausgestaltungsmerkmale aufweisen. Diese können einzeln oder in beliebiger Kombination miteinander eingesetzt werden.

Die weiche Rundung des unteren, an den Boden anschließenden Seitenwandbereichs des beanspruchten Steckverbinders kann eine Kreisbogenform oder eine ellipsenähnliche Form aufweisen.

Die weiche Rundung des unteren Seitenwandbereichs kann sich durchgehend vom Boden bis zum gekrümmten Übergang erstrecken.

Der erste untere, gerundete und ausbauchende Seitenwandbereich und der zweite einspringende Seitenwandbereich können in ihrer Axialrichtung unterbrechungsfrei ausgebildet sind.

Der Steckverbinder kann beidseits der Verbindermitte am freien Randbereich der Seitenwände federnde Rückhalteelemente mit einer in der Seitenansicht rechteckigen Plattenform aufweisen, deren Unterkanten einen unterschiedlichen Abstand vom Boden oder vom einspringenden Seitenwandbereich aufweisen.

Der Steckverbinder kann beidseits der Verbindermitte am freien Randbereich der Seitenwände federnde Rückhalteelemente mit einer in der Seitenansicht rechteckigen Plattenform aufweisen, deren Oberkanten einen unterschiedlichen Abstand vom Boden oder vom einspringenden Seitenwandbereich aufweisen.

Der Steckverbinder kann beidseits der Verbindermitte am freien Randbereich der Seitenwände federnde Rückhalteelemente mit einer in der Seitenansicht rechteckigen Plattenform aufweisen, deren Vorderkanten eine unterschiedliche Länge aufweisen.

Der Steckverbinder kann beidseits der Verbindermitte am freien Randbereich der Seitenwände federnde Rückhalteelemente mit einer in der Seitenansicht rechteckigen Plattenform aufweisen, deren Vorderkanten am oberen Ende mit einer Verrundung an die jeweilige Oberkante der Rückhalteelemente anschließen.

Der Steckverbinder kann beidseits der Verbindermitte am freien Randbereich der Seitenwände federnde Rückhalteelemente mit einer in der Seitenansicht rechteckigen Plattenform aufweisen, deren Vorderkanten am unteren Ende jeweils eine z.B. spitze und nach außen abstehende Nase an der Ecke bzw. Anschlussstelle zur jeweilige Unterkante aufweisen.

Der Steckverbinder kann beidseits der Verbindermitte am freien Randbereich der Seitenwände jeweils eine axiale Reihe von drei, vier oder mehr federnden Rückhalteelemente mit einer in der Seitenansicht rechteckigen Plattenform aufweisen.

Der Steckverbinder kann beidseits der Verbindermitte am freien Randbereich der Seitenwände federnde Rückhalteelemente mit einer in der Seitenansicht rechteckigen Plattenform aufweisen, wobei die Vorderkanten der jeweils am nächsten zur Verbindermitte angeordneten Rückhalteelements und der jeweils am nächsten zur Stirnseite des Steckverbinders angeordneten Rückhalteelements eine kleinere Länge als die Vorderkante(n) des oder der dazwischen angeordneten Rückhalteelement aufweisen.

Der Steckverbinder kann beidseits der Verbindermitte am freien Randbereich der Seitenwände federnde Rückhalteelemente mit einer in der Seitenansicht rechteckigen Plattenform aufweisen, wobei die Oberkante des jeweils am nächsten zur Stirnseite des Steckverbinders angeordneten Rückhalteelements einen kleineren Abstand vom Boden oder vom einspringenden Seitenwandbereich als die anderen Rückhalteelemente in der Reihe aufweist.

Der Steckverbinder kann beidseits der Verbindermitte am freien Randbereich der Seitenwände federnde Rückhalteelemente mit einer in der Seitenansicht rechteckigen Plattenform aufweisen, wobei die Unterkante des jeweils am nächsten zur Verbindermitte angeordneten Rückhalteelements einen größeren Abstand vom Boden oder vom einspringenden Seitenwandbereich als die Unterkanten der anderen Rückhalteelemente in der Reihe aufweist.

Der Steckverbinder kann beidseits der Verbindermitte am freien Randbereich der Seitenwände federnde Rückhalteelemente mit einer in der Seitenansicht rechteckigen Plattenform aufweisen, wobei die Unterkanten des jeweils am nächsten zur Stirnseite des Steckverbinders angeordneten Rückhalteelements und des in Richtung zur Verbindermitte nächstfolgenden Rückhalteelements im Wesentlichen den gleichen Abstand vom Boden oder vom einspringenden Seitenwandbereich aufweisen.

Der Steckverbinder kann Seitenwände umfassen, die an ihren stirnseitigen Enden jeweils eine in Richtung vom Boden zum freien Randbereich ansteigende Anlaufschräge aufweisen. Die Anlaufschräge kann an einem einspringenden Seitenwandbereich enden.

Der Steckverbinder kann Seitenwände mit einer Mittenfindung umfassen, welche beidseits der Verbindermitte angeordnete und gegeneinander gerichtete federnde Anschlagnasen aufweist.

Der Steckverbinder kann offene Stirnseiten und einen axial durchgängigen inneren Hohlraum aufweisen.

Der Steckverbinder kann als Stanz- und Biegeteil aus einem metallischen Blech, insbesondere aus verzinktem Stahlband, ausgebildet sein.

Bei der beanspruchten Steckverbindung von Abstandshaltern einer Isolierverglasung mit einem Hohlprofil des Abstandshalters und einem eingesteckten Steckverbinder kann der Boden des beanspruchten Steckverbinders an einem Profilboden des Hohlprofils angeordnet sein, der zu einem Innenraum der Isolierverglasung weist.

Bei der beanspruchten Steckverbindung von Abstandshaltern einer Isolierverglasung kann das Hohlprofil mehrteilig ausgebildet sein und ein Profilteil aus Kunststoff sowie ein Profilteil aus Metall, insbesondere Edelstahl, aufweisen.

Die Erfindung ist in den Zeichnungen beispielhaft und schematisch dargestellt. Im Einzelnen zeigen:
- Figur 1 und 2:: einen geraden Steckverbinder in verschiedenen perspektivischen Ansichten,
- Figur 3:: eine Seitenansicht des Steckverbinders von Figur 1 und 2,
- Figur 4:: eine Unteransicht des Steckverbinders,
- Figur 5:: eine Stirnansicht des Steckverbinders,
- Figur 6:: eine abgebrochene Darstellung eines Details VI von Figur 2,
- Figur 7 bis 9:: abgebrochene und vergrößerte Darstellungen von Details VII, VIII und IX von Figur 3,
- Figur 10 bis 13:: eine Steckverbindung mit Steckverbinder und Hohlprofil in Seitenansicht, Draufsicht, perspektivischer Ansicht und Stirnansicht,
- Figur 14:: eine andere perspektivische Stirnansicht des Steckverbinders,
- Figur 15:: eine perspektivische Ansicht von Rückhalteelementen und
- Figur 16:: eine abgebrochene Detaildarstellung des Steckverbinders und seiner Krümmungsradien.

Die Erfindung betrifft einen bevorzugt geraden Steckverbinder (1) für Hohlprofile (2) von Abstandhalterrahmen einer Isolierverglasung. Die Erfindung betrifft außerdem eine von dem Steckverbinder (1) mit ein oder mehreren Hohlprofilen (2) gebildete Steckverbindung (39). Die Erfindung bezieht sich auch auf einen mit der Steckverbindung ausgerüsteten Abstandhalterrahmen und eine Isolierverglasung.

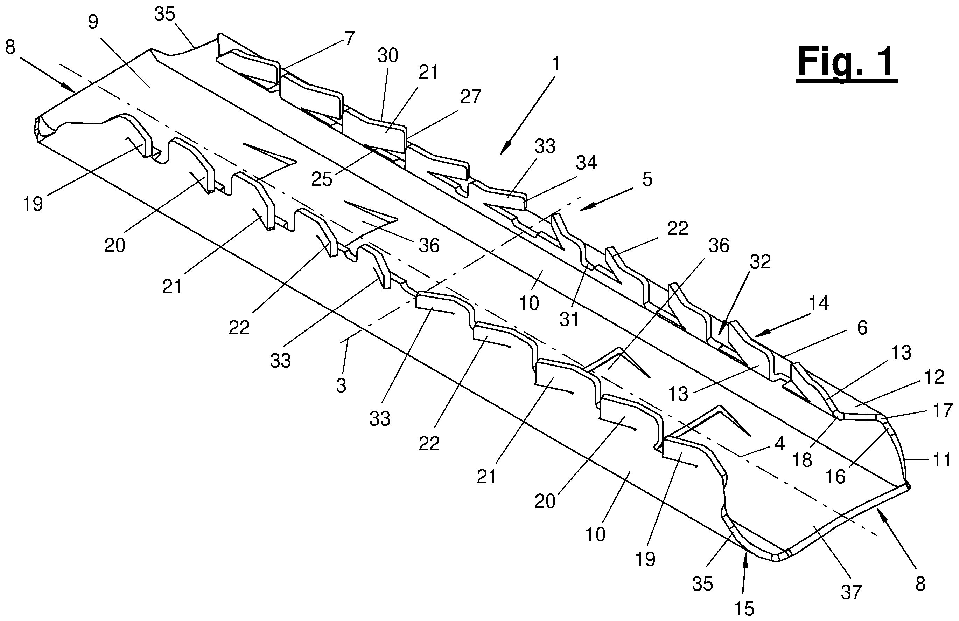

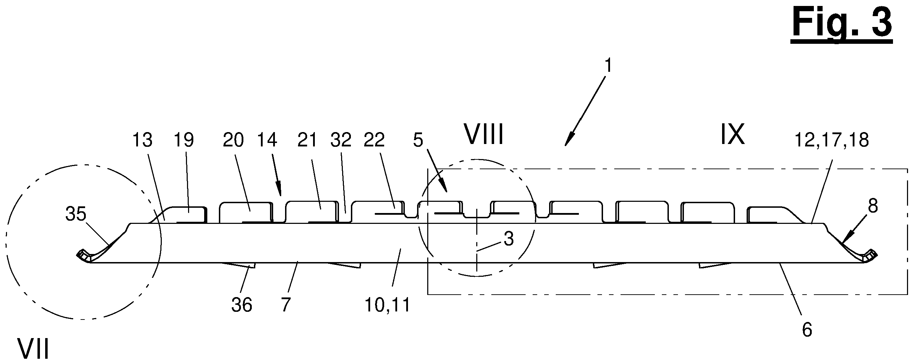

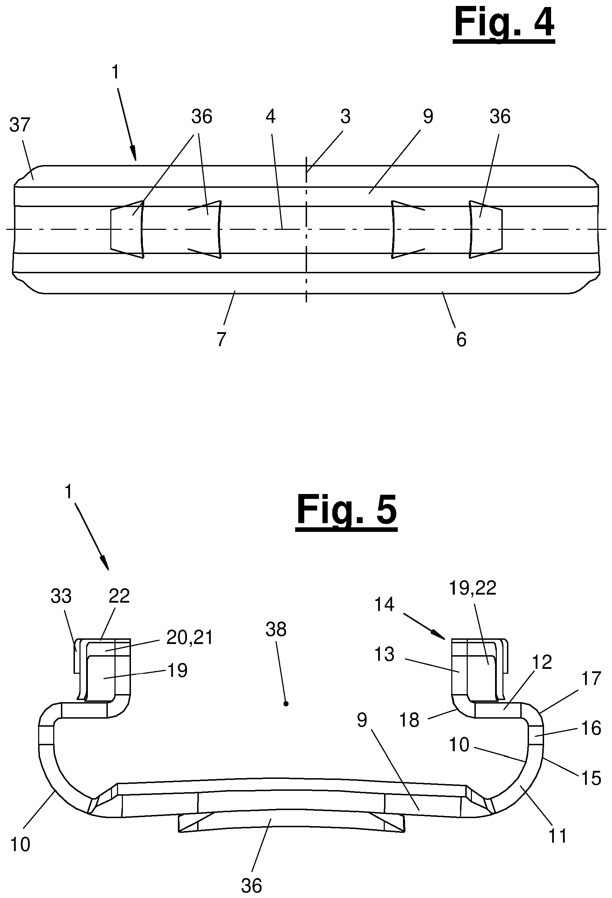

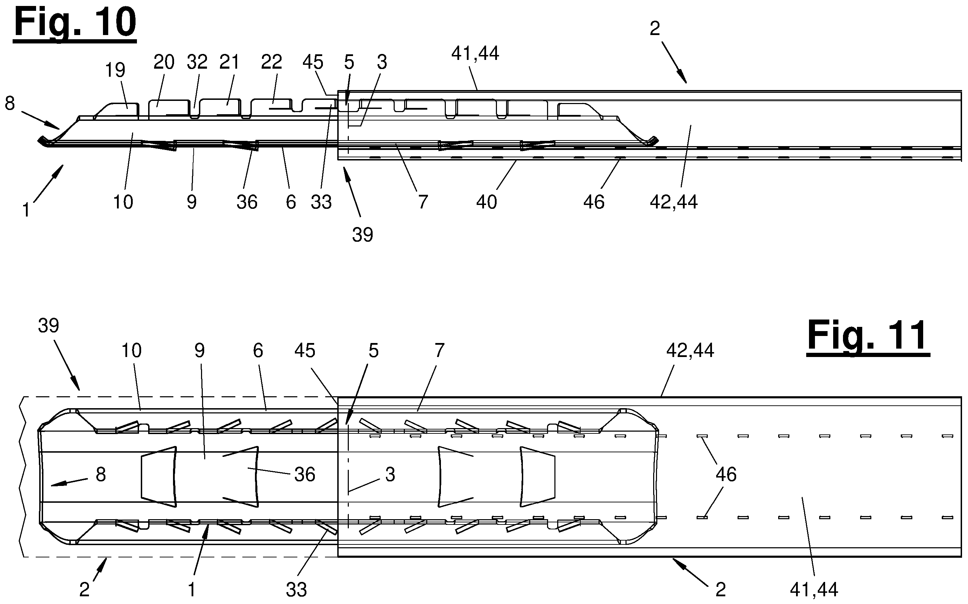

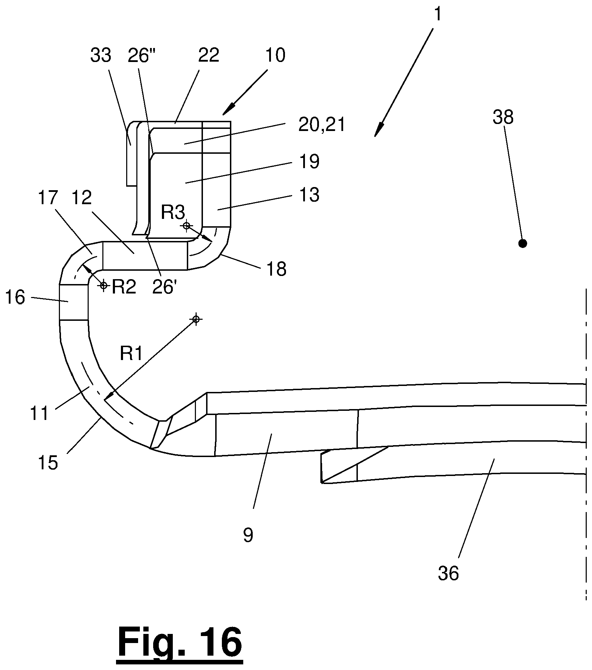

Figur 1, 2, 14 und 15 zeigen den Steckverbinder (1) in perspektivischen Ansichten und verschiedenen Lagen. In Figur 3 und 4 sind eine Seitenansicht sowie eine Bodenansicht dargestellt. Figur 5 und 16 zeigen eine Stirnansicht des Steckverbinders (1). Eine Steckverbindung (39) mit einem Steckverbinder (1) und dort ein- oder beidseits aufgesteckten Hohlprofilen bzw. Hohlprofilenden ist in Figur 10 bis 13 in verschiedenen Ansichtern dargestellt.

Der gerade Steckverbinder (1) hat einen im Wesentlichen U-förmigen Querschnitt mit offenen Stirnseiten (8) und einem liegenden Boden (9), an dessen Längsrändern aufrechte Seitenwände (10) anschließen. Der Boden (9) ist an der Unterseite des Steckverbinders (1) angeordnet. An den Stirnseiten (8) weist der Boden (9) jeweils eine schräg aufwärts gebogene Bodenlippe (37) auf.

Die Seitenwände (10) und ggf. der Boden (9) können dünnwandig und ggf. mit gleichbleibender Wandstärke ausgebildet sein. Die Seitenwände (10) haben jeweils eine profilierte Querschnittsform, die z.B. gemäß Figur 5 ausgebildet ist. Der Boden (9) und die Seitenwände (10) umschließen einen inneren Hohlraum (38). Der bevorzugt freie Hohlraum (38) kann sich über die Länge des Steckverbinders (1) erstrecken. Er kann an den Stirnseiten (8) und an der Oberseite offen sein. Der Steckverbinder (1) weist ferner eine Mittenfindung (5) auf.

Der Steckverbinder (1) besitzt eine Längsrichtung oder Längsachse (4) und eine Verbindermitte (3). Der gezeigte gerade Steckverbinder hat beidseits von der Verbindermitte (3) in Richtung zu den offenen Stirnseiten (8) erstreckte Verbinderschenkel (6,7).

Auf die Verbinderschenkel (6,7) werden von den Stirnseiten (8) her Hohlprofilenden aufgesteckt und bis zur Verbindermitte (3) und der Mittenfindung (5) geschoben. Im Bereich der Verbindermitte (3) stoßen die Hohlprofilenden mit ihren Stirnseiten (45) dicht aneinander.

Die Hohlprofilenden können die Endbereiche eines ringförmig gebogenen Abstandhalterrahmens sein. Sie können alternativ die Enden von mehreren einzelnen Hohlprofilen sein.

Das oder die Hohlprofile (2) sind vorzugsweise als wärmeisolierende Warm-Edge-Hohlprofile ausgebildet. Sie können als dünnwandige Metallprofile, z.B. aus Edelstahl, ausgebildet sein. In einer anderen Ausführung können das oder die Hohlprofile (2) aus einem Verbundmaterial, z.B. Kunststoff und Metall, ausgebildet sein. Sie können dabei z.B. gemäß Figur 10 bis 13 ein Profilteil (43) aus Kunststoff und ein bevorzugt äußeres Profilteil (44) aus Metall, insbesondere Edelstahl, aufweisen. Das metallische und dünnwandige, z.B. folienartige, Profilteil (44) kann zumindest bereichsweise das Profilteil (43) umschließen.

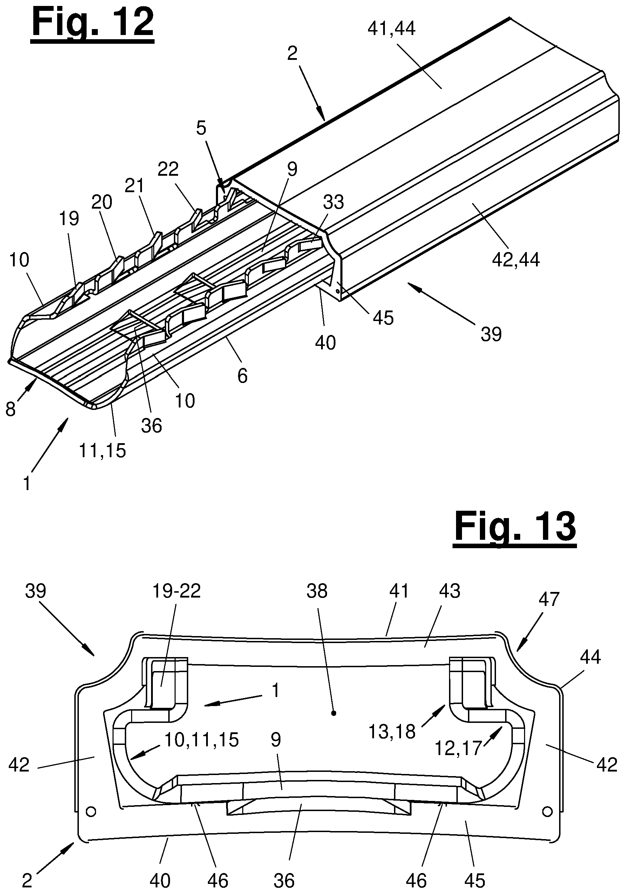

In einer z.B. in Figur 13 gezeigten Querschnittsform haben das oder die Hohlprofil(e) (2) einen Profilboden (40) und ein Profildach (41), die durch seitliche Profilwände (42) miteinander verbunden sind. In der Einbaustellung am Abstandhalterrahmen bzw. an der Isolierverglasung weist der Profilboden (40) zum Scheibeninnenraum. In der Einsteckstellung bzw. in der Steckverbindung (39) weist der Boden (9) des Steckverbinders (1) ebenfalls zum Scheibeninnenraum. Am Profilboden (40) können eine oder mehrere Reihen von Perforationen (46) für einen Gaszutritt aus dem Scheibeninnenraum zum Hohlprofil (2) und zu einem im Hohlprofil (2) und durch den Steckverbinder (1) laufend angeordneten Trocknungsmittel (nicht dargestellt) angeordnet sein.

Die im Querschnitt profilierten aufrechten Seitenwände (10) des Steckverbinders (1) sind jeweils in der Höhe in mehrere Seitenwandbereiche (11,12,13) gegliedert und weisen an ihrem freien und vom Boden (9) wegweisenden Randbereich (14) mehrere federelastische und dünnwandige Rückhalteelemente (19-22) auf.

Die Seitenwände (10) weisen jeweils einen unteren gerundeten und zur Verbinderaußenseite ausbauchenden Seitenwandbereich (11) auf, der randseitig an den Boden (9) anschließt und in diesen übergeht. An den ersten oder unteren Seitenwandbereich (11) schließt sich mit einem gekrümmten Übergang (17) ein zur Verbinderinnenseite einspringender zweiter Seitenwandbereich (12) an. An diesen schließt endseitig mit einer Kante (18) ein dritter und aufrechter Seitenwandbereich (13) mit dem freien Randbereich (14) und den Rückhalteelementen (19-22) an. Figur 5 und 16 verdeutlichen in der Stirnansicht die Gliederung in die drei Seitenwandbereiche (11,12,13).

Der erste oder untere Seitenwandbereich (11) hat eine gerundete und ausbauchende Form und weist im Anschluss an den Boden (9) eine weiche Rundung (15) auf. Diese Rundung (15) kann sich ausgehend vom Boden (9) über einen Bogenwinkel von circa 90° erstrecken. Die weiche Rundung hat in der gezeigten Ausführung eine Kreisbogenform. Sie kann alternativ eine andere, z.B. ellipsenähnliche Form haben.

Die weiche Rundung (15) kann sich bis zum scharf gekrümmten Übergang (17) erstrecken. In der gezeigten Ausführungsform ist ein gerades und z.B. aufrecht, insbesondere senkrecht zum Boden (9) erstrecktes Zwischenstück (16) zwischen der weichen Rundung (15) und dem gekrümmten Übergang (17) angeordnet. Das Zwischenstück (16) kann eine wesentlich geringere Länge als die weiche Rundung (15) haben. Die weiche Rundung (15) und das Zwischenstück (16) können tangential aneinander anschließen.

Der zweite und einspringende Seitenwandbereich (12) hat in der gezeigten Ausführungsform eine gerade Erstreckung und ist parallel zum Boden (9) bzw. zu dessen Hauptebene ausgerichtet. Der Übergang (17) und die gebogene Kante (18) sind voneinander abgesetzt und distanziert.

Der dritte und aufrechte Seitenwandbereich (13) hat ebenfalls bevorzugt eine gerade Erstreckung und ist z.B. senkrecht zum Boden (9) bzw. zu dessen Hauptebene ausgerichtet. Die Krümmung (17) und die gebogene Kante (18) können jeweils einen Bogenwinkel von circa 90° haben.

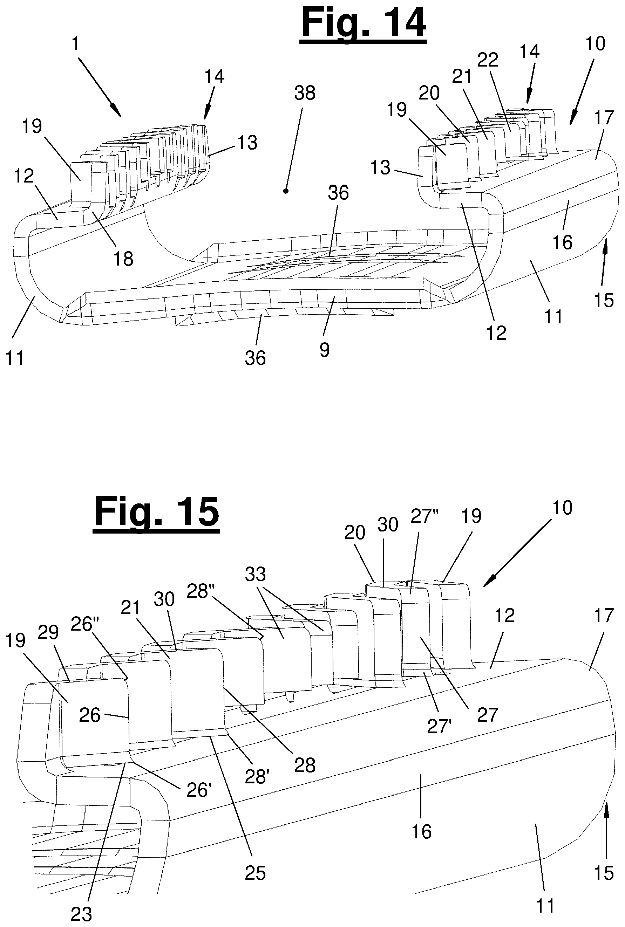

Der Krümmungsradius (R1) der weichen Rundung (15) ist wesentlich größer als der kleine Krümmungsradius (R2) des Übergangs (17) und ggf. (R3) der gebogenen Kante (18). Figur 15 verdeutlicht diese Ausbildung in einer abgebrochenen und vergrößerten Detaildarstellung zu Figur 5. In der gezeigten Ausführungsform ist der Krümmungs- oder Biegeradius (R1) der weichen Rundung (15) circa 7 bis 8 mal so groß wie der Krümmungsradius (R2) des Übergangs (17) bzw. (R3) der gebogenen Kante (18). Figur 5 und 13 verdeutlichen ebenfalls diese Ausbildung.

Der gerundete und ausbauchende Seitenwandbereich (11) und der einspringende Seitenwandbereich (12) sind in der Längsrichtung (4) unterbrechungsfrei ausgebildet. Der gerundete und ausbauchende Seitenwandbereich (11) weist seiner Außenseite eine über die Verbinderlänge durchgehend glatte Wandfläche auf.

Am freien Randbereich (14) der Seitenwände (10) sind an den Schenkeln (6,7) beidseits der Verbindermitte (3) jeweils mehrere federnde Rückhalteelemente (19-22) hintereinander in einer Reihe angeordnet. Die Rückhalteelemente (19-22) können als Federnasen oder Federlamellen ausgebildet sein.

In der gezeigten Ausführungsform sind an den Seitenwänden (10) der Verbinderschenkel (6,7) beidseits der Verbindermitte (3) jeweils eine axiale Reihe von z.B. vier Rückhalteelementen (19-22) angeordnet. In einer anderen Variante kann die betreffende Zahl an Rückhalteelementen drei, fünf oder mehr betragen.

Die Rückhalteelemente (19-22) gehen vom aufrechten Seitenwandbereich (13) aus und sind schräg nach außen gebogen. Die beidseits der Verbindermitte (3) angeordneten Rückhalteelemente (19-22) weisen jeweils in Richtung zur Verbindermitte (3). Sie verkrallen sich jeweils mit der zugeordneten seitlichen Profilwand (42) des aufgesteckten Hohlprofilendes und verhindern ein unbeabsichtigtes Abziehen des Hohlprofilendes vom Steckverbinder (1).

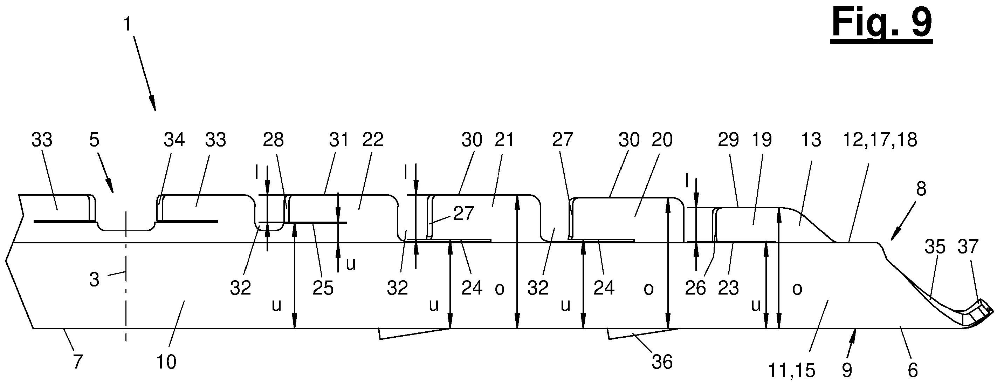

Wie Figur 3 in der Seitenansicht und Figur 9 in der vergrößerten Detaildarstellung zu Figur 3 sowie die perspektivischen Ansichten von Figur 14 bis 16 verdeutlichen, haben die Rückhalteelemente (19-22) in der Seitenansicht jeweils eine rechteckige Plattenform. Sie weisen eine senkrecht zum Boden (9) erstreckte Vorderkante (26,27,28) auf. Sie haben außerdem eine senkrecht zum Boden erstreckte Biegekante oder Anschlusskante am Übergang in den aufrechten Seitenwandbereich (13).

Die bevorzugt geraden Unterkanten (23,24,25) und Oberkanten (29,30,31) der Rückhalteelemente (19-22) erstrecken sich jeweils bevorzugt parallel zum Boden (9) bzw. zu dessen Hauptebene.

Die Vorderkanten (26,27,28) der Rückhalteelemente (19-22) können an ihrem oberen Ende mit einer Verrundung (26",27",28") an die jeweilige Oberkante (29,30,31) der Rückhalteelemente (19-22) anschließen. Die Verrundung (26",27",28") ist günstig zum widerstandsarmen Aufstecken eines Hohlprofils (2).

Am unteren Ende können die Vorderkanten (26,27,28) jeweils eine z.B. spitze und nach außen abstehende Nase (26',27',28') an der Ecke bzw. Anschlussstelle zur jeweilige Unterkante (23,24,25) aufweisen. Die Nase (26',27',28') kann beim Aufstecken eines Hohlprofils (2) überfahren werden und ist vorteilhaft für den anschließenden Rückhalt des Steckverbinders (1) im Hohlprofil (2), wobei sie sich innen in die seitliche Profilwand (42) des Hohlprofils (2) eingraben kann.

An den Seitenwänden (10) beidseits der Verbindermitte (3) sind jeweils Rückhalteelemente (19-22) angeordnet, deren Unterkanten (23,24,25) einen unterschiedlichen Abstand (u) vom Boden (9) oder vom einspringenden Seitenwandbereich (12) aufweisen. Gemäß Figur 9 hat das jeweils nächstliegend zur Verbindermitte (3) benachbarte Rückhalteelement (22) eine Unterkante (25), die einen größeren Abstand (u) hat als die anderen Unterkanten (24,25) der in Richtung zur Stirnseite (8) nachfolgenden Rückhalteelemente (21,20,19). Diese Unterkanten (24,23) sind auf Höhe oder knapp oberhalb der Oberseite des einspringenden Seitenwandbereichs (12) angeordnet.

Die an den Seitenwänden (10) jeweils beidseits der Verbindermitte (3) angeordneten Rückhalteelemente (19-22) haben Oberkanten (29,30,31), die einen unterschiedlichen Abstand (o) vom Boden (9) bzw. dessen Hauptebene oder vom einspringenden Seitenwandbereich (12) aufweisen. Bei der gezeigten Ausführungsform ist der Abstand (o) des nächstliegend zur Stirnseite (8) angeordneten Rückhalteelements (19) kleiner als bei den anderen in Richtung zur Verbindermitte (3) folgenden Rückhalteelementen (20,21,22). Diese folgenden Rückhalteelemente (20,21,22) können untereinander den gleichen Bodenabstand (o) haben.

Die jeweils beidseits der Verbindermitte (3) angeordneten Seitenwände (10) weisen Rückhalteelemente (19-22) auf, deren Vorderkanten (26,27,28) eine unterschiedliche Länge (1) haben. Das zur Verbindermitte (3) nächstbenachbarte Rückhalteelement (22) hat die kleinste Vorderkantenlänge (1). Die beiden in Richtung zur Stirnseite (8) nachfolgenden Rückhalteelemente (20,21) haben jeweils eine wesentlich größere Vorderkantenlänge (1). Das zur Stirnseite (8) nächstgelegene Rückhalteelement (19) besitzt eine Vorderkantenlänge (1), die zwischen den unterschiedlichen Vorderkantenlängen der anderen Rückhalteelemente (20,21,22) liegt.

Die in den Reihen jeweils mittleren Rückhalteelemente (20,21) können zumindest weitgehehend übereinstimmende Formen und Abmessungen haben. Das zur Verbindermitte (3) jeweils nächstbenachbarte Rückhalteelement (22) und das zur Stirnseite (8) jeweils nächstbenachbarte Rückhalteelement (19) sind kleiner als die mittleren Rückhalteelemente (20,21) und haben eine geringere Vorderkantenlänge (1). Die besagten endseitigen Rückhalteelemente (19,22) in den Reihen unterscheiden sich untereinander durch die Unterkantenhöhe (u) und die Oberkantenhöhe (o).

Gemäß Figur 3, 9 und 10 haben die jeweils beidseits der Verbindermitte (3) an den Seitenwänden (10) angeordneten Rückhalteelemente (19-22) untereinander jeweils einen axialen Abstand und einen Freiraum (32) zwischen sich.

Die Rückhalteelemente (19-22) am freien Randbereich (14) können z.B. gemäß Figur 13 jeweils nach oben mit dem Profildach (41) und seitlich mit dem oberen, z.B. eingezogenen, Bereich der angrenzenden Seitenwand (42) eines aufgesteckten Hohlprofilendes in Eingriff treten. An einem solchen relativ stabilen und ggf. einbauchend gewölbten Eck- oder Anschlussbereich (47) zwischen Profildach (41) und Seitenwand (42) können sich die Rückhalteelemente (19-22) besonders gut und zweiachsig verkrallen und auch wirksam etwaige Höhen- und/oder Seitentoleranzen federnd ausgleichen. Der untere ausbauchende Seitenwandbereich (11) mit der weichen Rundung (15) kann in den Hohlprofilraum unter dem Anschlussbereich (47) ragen und sich bedarfsweise beim Toleranzausgleich verformen.

Vorteilhaft ist zudem, dass die Profilseitenwand (42) durch Positionierung der Rückhalteelemente (19-22) nicht ausgeweitet wird, was zu einer Maßhaltigkeit und einer damit verbundenen Dichtigkeit des Isolierglas-Abstandhalterrahmens führt.

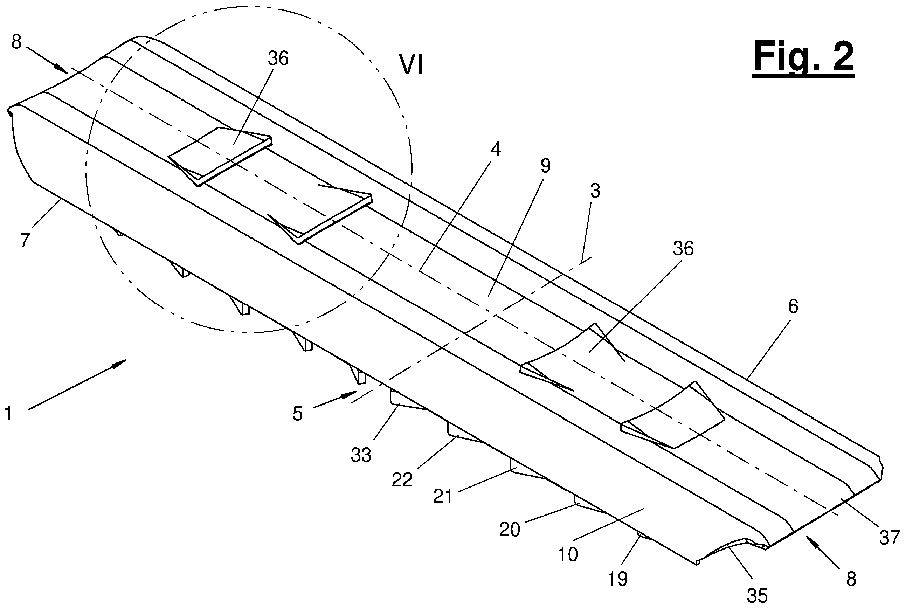

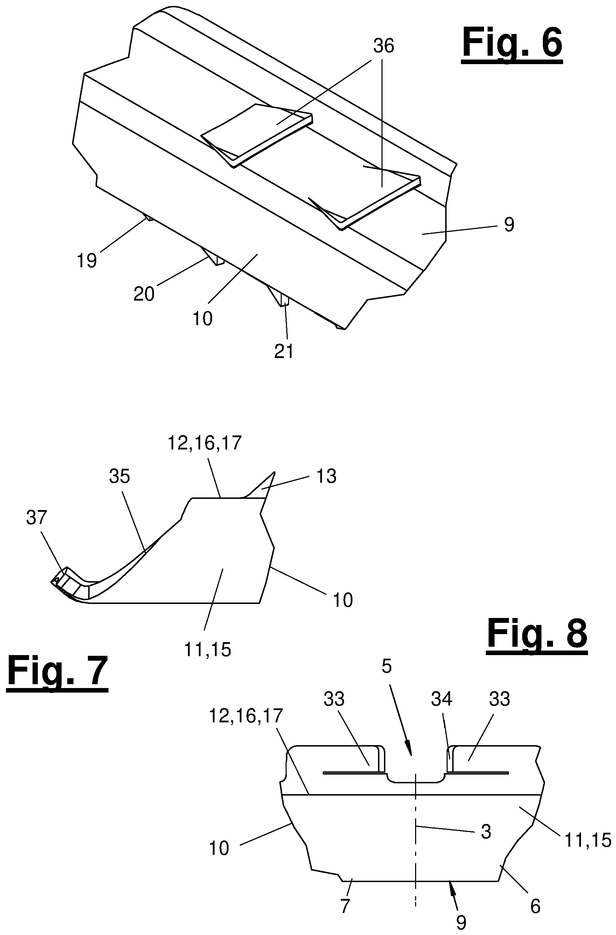

Am Boden (9) können beidseits der Verbindermitte (3) jeweils ein oder mehrere Rückhaltezungen (36) angeordnet sein. Diese können schräg nach außen gebogen sein und an den Schenkeln (6,7) jeweils zur Verbindermitte (3) weisen. Die Rückhaltezungen (36) können federelastisch ausgestaltet sein. Figur 2 und 6 verdeutlichen die Ausbildung.

Der Steckverbinder (1) weist an den stirnseitigen Enden der Seitenwände (10) jeweils eine Anlaufschräge (35) auf, die vom Boden (9) ausgeht und zum freien Randbereich (14) ansteigt. Die Anlaufschrägen (35) sind jeweils in Richtung zur Verbindermitte (3) geneigt. Die Anlaufschrägen (35) enden an dem einspringenden Seitenwandbereich (12). Figur 3 und 7 zeigen die Ausbildung im Detail.

Die Mittenfindung (5) kann in beliebig geeigneter Weise ausgebildet sein. In der gezeigten Ausführungsform von Figur 3 und 8 ist sie als Mittenanschlag gestaltet. Sie wird an den beiden Seitenwänden (10) jeweils von beidseits der Verbindermitte (3) angeordneten und mit ihren Vorderkanten (34) gegeneinander gerichteten federnden Anschlagnasen (33) gebildet. Die Anschlagnasen (33) und die jeweils nächstgelegenen Rückhalteelemente (22) können eine weitgehend übereinstimmende Form haben.

Wie Figur 10 bis 12 verdeutlichen, überfährt das zuerst am einen Verbinderschenkel (7) aufgesteckte Hohlprofilende die diesseitigen, federnd ausweichenden Anschlagnasen (33) sowie die Verbindermitte (3). Es stösst dann mit seiner Stirnseite (45) an den jenseitigen Anschlagnasen (33) an und wird gestoppt. Das zweite am anderen Verbinderschenkel (7) aufgesteckte Hohlprofilende schlägt dann stirnseitig und dicht am ersten Hohlprofilende an. Bei einer Variante der Mittenfindung (5) mit Festanschlag können die beidseits aufgesteckten Hohlprofilenden mit ihren Stirnseiten (45) am Festanschlag stoppen und sich dort ggf. eingraben.

In der gezeigten Ausführungsform ist der Steckverbinder (1) als Stanz- und Biegeteil aus einem metallischen Blech, insbesondere aus einem verzinkten Stahlband, ausgebildet. Die Rückhalteelemente (19-22), die Anschlagnasen (33) und die Rückhaltezungen (36) können dabei jeweils aus der Verbinderwandung freigeschnitten und ausgebogen sein. Die besagten Unterkanten (23,24,25) und Oberkanten (29,30,31) sowie die Vorderkanten (26,27,28) können jeweils als bevorzugt gerade Schnittkanten ausgebildet sein. Die Kantenübergänge können gerundet sein. Die Freiräume (32) können durch einen Freischnitt beim Stanzen aus dem Blech bzw. der sog. Platine gebildet sein.

In einer anderen Ausführung können die Steckverbinder (1) aus einem anderen Material gebildet sein, z.B. Kunststoff oder einem Verbundwerkstoff. Sie können als Spritzteil, insbesondere als Kunststoffspritzteil, ausgebildet sein. Auch eine Ausgestaltung als Gussteil aus Metall oder Kunststoff ist möglich.

Abwandlungen der gezeigten und beschriebenen Ausführungsformen sind im Rahmen der Ansprüche in verschiedener Weise möglich.

Der gezeigte Steckverbinder (1) ist einteilig. Er kann alternativ mehrteilig ausgebildet sein, wobei er z.B. eine Oberschale und eine Unterschale in zusammengesteckter Anordnung aufweist.

Ein abgewandelter Steckverbinder (1) kann im Bereich der Verbindermitte (3) eine lose eingesetzte oder fest verbundene, insbesondere an die Seitenwände (10) angeformte, Dachplatte aufweisen, die den Hohlraum (38) abdeckt und nach oben verschließt sowie ggf. ein Dichtmittel aufnimmt. Die Dachplatte reicht bei modifizierter Mittenfindung (5) bis zu den Reihen der Rückhalteelemente (19-22) und ist deutlich kürzer als die Verbinderlänge.

Ein abgewandelter Steckverbinder (1) kann ferner als Eckwinkel ausgebildet sein und um z.B. um 90° abgewinkelte Verbinderschenkel (6,7) aufweisen.

Ein abgewandelter Steckverbinder (1) kann außerdem die vorbeschriebene Ausbildung der gerundeten, einspringenden und aufrechten Seitenwandbereiche (11,12,13) in Kombination mit einer anderen Ausbildung der mehreren federnden Rückhalteelemente am freien Randbereich (14) der Seitenwände (10) beidseits der Verbindermitte (3) haben. Solche Rückhalteelemente können unterschiedlich ausgebildet sein, z.B. als hochragende Zahnleisten, die oben auf dem freien Randbereich (14) angeordnet sind. Andere mögliche Gestaltungen betreffen z.B. seitlich vom oberen Seitenwandbereich (13) ausgestellte, insbesondere abgebogene, und jeweils zur Verbindermitte (3) weisende Rückhalteelemente in Dreiecksform oder Keilform. Die Rückhalteelemente können aus dem oberen Seitenwandbereich (13) freigeschnitten und abgebogen sein. Sie können auch am oberen Seitenwandbereich (13) außenseitig angesetzt oder angeformt sein, z.B. in Form von dünnwandigen Lamellen.

Ein solcher abgewandelter Steckverbinder (1) kann in der vorgenannten Weise aus Metall oder Kunststoff oder aus einem Verbundmaterial aus Metall und Kunststoff oder aus einem anderen geeigneten Material bestehen.

### BEZUGSZEICHENLISTE

- 1: Steckverbinder
- 2: Hohlprofil, Abstandhalterhohlprofil
- 3: Verbindermitte
- 4: Längsachse, Axialrichtung
- 5: Mittenfindung, Mittenanschlag
- 6: Verbinderschenkel
- 7: Verbinderschenkel
- 8: Stirnseite
- 9: Boden
- 10: Seitenwand, Seitensteg
- 11: Seitenwandbereich gerundet
- 12: Seitenwandbereich einspringend
- 13: Seitenwandbereich aufrecht
- 14: freier Rand
- 15: Rundung
- 16: Zwischenstück
- 17: Übergang
- 18: Kante
- 19: Rückhalteelement, Rückhaltenase, stirnseitig
- 20: Rückhalteelement, Rückhaltenase
- 21: Rückhalteelement, Rückhaltenase
- 22: Rückhalteelement, Rückhaltenase, mittenseitig
- 23: Unterkante
- 24: Unterkante
- 25: Unterkante
- 26: Vorderkante
- 26': Nase
- 26": Verrundung
- 27: Vorderkante
- 27': Nase
- 27": Verrundung
- 28: Vorderkante
- 28': Nase
- 28": Verrundung
- 29: Oberkante
- 30: Oberkante
- 31: Oberkante
- 32: Freiraum, Freischnitt
- 33: Anschlagnase
- 34: Vorderkante
- 35: Anlaufschräge
- 36: Rückhaltezunge bodenseitig
- 37: Bodenlippe
- 38: Hohlraum
- 39: Steckverbindung
- 40: Profilboden
- 41: Profildach
- 42: Profilwand seitlich
- 43: Profilteil Kunststoff
- 44: Profilteil Metall
- 45: Stirnseite
- 46: Perforation
- 47: Anschlussbereich

- R1: Krümmungsradius der weichen Rundung
- R2: Krümmungsradius des Übergangs
- R3: Krümmungsradius der Kante

- 1: Länge Vorderkante Rückhalteelement
- o: Abstand Oberkante Rückhalteelement
- u: Abstand Unterkante Rückhalteelement

## Patentansprüche

1. Gerader Steckverbinder für Hohlprofile (2), insbesondere Warm-Edge-Hohlprofile, von Abstandshaltern einer Isolierverglasung, wobei der Steckverbinder (1) einen im wesentlichen U-förmigen Querschnitt mit offenen Stirnseiten (8) und einem in Einbaustellung zum Scheibeninnenraum weisenden Boden (9) sowie randseitigen, im Querschnitt profilierten Seitenwänden (10) und einer Mittenfindung (5) aufweist, wobei die Seitenwände (10) jeweils in der Höhe in mehrere Seitenwandbereiche (11,12,13) gegliedert sind und an ihrem freien Randbereich (14) Rückhalteelemente (19-22) aufweisen, **dadurch gekennzeichnet, dass** die Seitenwände (10) jeweils aufweisen
- einen unteren, an den Boden (9) anschließenden, Seitenwandbereich (11) mit einer gerundeten und ausbauchenden Form,
- einen daran anschließenden zur Verbinderinnenseite einspringenden Seitenwandbereich (12), wobei zwischen dem unteren Seitenwandbereich (11) und dem einspringenden Seitenwandbereich (12) ein gekrümmter Übergang (17) angeordnet ist
- und einen an den einspringenden Seitenwandbereich (12) mit einer Kante (18) anschließenden, aufrechten Seitenwandbereich (13), der den freien Randbereich (14) und die Rückhalteelemente (19-22) aufweist,
- wobei der untere Seitenwandbereich (11) im Anschluss an den Boden (9) eine weiche Rundung (15) aufweist und der Übergang (17) eine scharfe Krümmung aufweist,
- wobei der Krümmungsradius (R1) der weichen Rundung (15) um ein Mehrfaches größer ist als der Krümmungsradius (R2) des Übergangs (17).

2. Steckverbinder nach Anspruch 1, **dadurch gekennzeichnet, dass** die weiche Rundung (15) des unteren Seitenwandbereichs (11) sich durchgehend vom Boden (9) bis zum gekrümmten Übergang (17) erstreckt.

3. Steckverbinder nach Anspruch 1 oder 2, **dadurch gekennzeichnet, dass** der untere Seitenwandbereich (11) ein gerades und aufrecht, insbesondere senkrecht zum Boden (9) erstrecktes Zwischenstück (16) zwischen der weichen Rundung (15) und dem Übergang (17) aufweist.

4. Steckverbinder nach Anspruch 3, **dadurch gekennzeichnet, dass** die Erstreckungslänge des geraden Zwischenstücks (16) deutlich kleiner ist als die Bogenlänge der weichen Rundung (15).

5. Steckverbinder nach einem der vorhergehenden Ansprüche, **dadurch gekennzeichnet, dass** der einspringende Seitenwandbereich (12) eine parallel oder schräg zum Boden (9) ausgerichtete sowie bevorzugt gerade Erstreckung aufweist, wobei bevorzugt der aufrechte Seitenwandbereich (13) senkrecht zum Boden (9) ausgerichtet ist.

6. Steckverbinder nach einem der vorhergehenden Ansprüche, **dadurch gekennzeichnet, dass** die gebogene Kante (18) eine scharfe Krümmung aufweist, wobei der Krümmungsradius (R3) der weichen Rundung (15) um ein Mehrfaches größer als der Krümmungsradius der Kante (18) ist.

7. Steckverbinder nach einem der vorhergehenden Ansprüche, **dadurch gekennzeichnet, dass** die weiche Rundung (15) einen Bogenwinkel von ca. 90° aufweist.

8. Steckverbinder nach einem der Ansprüche 1 bis 7, **dadurch gekennzeichnet, dass** am freien Randbereich (14) der Seitenwände (10) beidseits der Verbindermitte (3) jeweils mehrere federnde Rückhalteelemente (19-22) in einer Längsachse (4) des Steckverbinders (1) hintereinander aufgereiht sind, wobei die Rückhalteelemente (19-22) seitlich schräg nach außen und zur Verbindermitte (3) weisend gebogen sind und in der Seitenansicht eine rechteckige Plattenform mit einer senkrecht zum Boden (9) erstreckten Vorderkante (26,27,28) aufweisen.

9. Steckverbinder nach Anspruch 9, **dadurch gekennzeichnet, dass** die Rückhalteelemente (19-22) Unterkanten (23,24,25) und Oberkanten (29,30,31) aufweisen, die sich jeweils bevorzugt parallel zum Boden (9) erstrecken.

10. Steckverbinder nach einem der Ansprüche 8 oder 9, **dadurch gekennzeichnet, dass** die jeweils beidseits der Verbindermitte (3) an den Seitenwänden (10) jeweils angeordneten Rückhalteelemente (19-22) einen axialen Abstand und zwischen sich einen Freiraum (32) aufweisen.

11. Steckverbinder nach einem der Ansprüche 1 bis 10, **dadurch gekennzeichnet, dass** am Boden (9) des Steckverbinder (1) beidseits der Verbindermitte (3) jeweils ein oder mehrere, schräg nach außen gebogene und zur Verbindermitte (3) weisende, federnde Rückhaltezungen (36) angeordnet sind.

12. Steckverbindung von Abstandshaltern einer Isolierverglasung, wobei die Steckverbindung (39) ein Hohlprofil (2) des Abstandshalters und einen eingesteckten Steckverbinder (1) aufweist, **dadurch gekennzeichnet, dass** der Steckverbinder (1) nach einem der Ansprüche 1 bis 11 ausgebildet ist.

13. Steckverbindung nach Anspruch 12, **dadurch gekennzeichnet, dass** das Hohlprofil (2) als Warm-Edge-Hohlprofil ausgebildet ist.

14. Steckverbindung nach einem der Ansprüche 12 oder 13, **dadurch gekennzeichnet, dass** das Hohlprofil (2) einen vorzugsweise geschlossenen Umfang mit einem Profilboden (40), seitlichen Profilwänden (42) und einem Profildach (41) aufweist.

15. Steckverbindung nach Anspruch 14, **dadurch gekennzeichnet, dass** das Hohlprofil (2) jeweils einen Anschlussbereich (47) zwischen dem Profildach (41) und einem bevorzugt eingezogenen oberen Bereich der angrenzenden Seitenwand (42) aufweist, wobei die federnden Rückhalteelemente (19-22) am freien Randbereich (14) der Seitenwände (10) an dem Anschlussbereich (47) bevorzugt mehrachsig in Eingriff mit dem Hohlprofil (2) treten.

## Claims

1. Straight plug-in connector for hollow profiles (2), in particular warm-edge hollow profiles, of spacers of an insulating glazing, wherein the plug-in connector (1) has a substantially U-shaped cross section with open end sides (8) and a bottom (9) facing the pane interior in the installed position as well as edge-side side walls (10) of profiled cross section and a centre locator (5), wherein the side walls (10) are each vertically divided into several side-wall regions (11, 12, 13) and have retaining elements (19-22) at their free boundary region (14), **characterized in that** the side walls (10) each have
- a lower side-wall region (11) adjoining the bottom (9) and having a rounded and convex shape,
- a side-wall region (12) adjoining the lower side-wall region and projecting inwardly towards the connector inner side, wherein a curved transition (17) is arranged between the lower side-wall region (11) and the inwardly projecting side-wall region (12),
- and a vertical side-wall region (13) adjoining the inwardly projecting side-wall region (12) by way of an edge (18) and having the free boundary region (14) and the retaining elements (19-22),
- wherein the lower side-wall region (11) has a soft rounding (15) adjoining the bottom (9) and the transition (17) has a sharp curvature,
- wherein the radius of curvature (R1) of the soft rounding (15) is several times greater than the radius of curvature (R2) of the transition (17).

2. Plug-in connector according to Claim 1, **characterized in that** the soft rounding (15) of the lower side-wall region (11) extends continuously from the bottom (9) to the curved transition (17).

3. Plug-in connector according to Claim 1 or 2, **characterized in that** the lower side-wall region (11) has a straight and vertically extending intermediate piece (16), in particular extending perpendicularly to the bottom (9), between the soft rounding (15) and the transition (17).

4. Plug-in connector according to Claim 3, **characterized in that** the extension length of the straight intermediate piece (16) is significantly smaller than the arc length of the soft rounding (15).

5. Plug-in connector according to any of the preceding claims, **characterized in that** the inwardly projecting side-wall region (12) has an extent that is oriented parallel or obliquely to the bottom (9) and is preferably straight, wherein the vertical side-wall region (13) is preferably oriented perpendicularly to the bottom (9).

6. Plug-in connector according to any of the preceding claims, **characterized in that** the bent edge (18) has a sharp curvature, wherein the radius of curvature (R3) of the soft rounding (15) is several times greater than the radius of curvature of the edge (18).

7. Plug-in connector according to any of the preceding claims, **characterized in that** the soft rounding (15) has an arc angle of approximately 90°.

8. Plug-in connector according to any of Claims 1 to 7, **characterized in that** several resilient retaining elements (19-22) are lined up one behind the other in a longitudinal axis (4) of the plug-in connector (1) at the free edge region (14) of the side walls (10) on both sides of the connector centre (3), wherein the retaining elements (19-22) are bent laterally obliquely outwards and towards the connector centre (3) and, in side view, have a rectangular plate shape with a front edge (26, 27, 28) extending perpendicularly to the bottom (9).

9. Plug-in connector according to Claim 9, **characterized in that** the retaining elements (19-22) have lower edges (23, 24, 25) and upper edges (29, 30, 31), each of which preferably extend parallel to the bottom (9).

10. Plug-in connector according to either of Claims 8 and 9, **characterized in that** the retaining elements (19-22) arranged on the side walls (10) on both sides of the connector centre (3) have an axial spacing and a clearance (32) between them.

11. Plug-in connector according to any of Claims 1 to 10, **characterized in that** one or more resilient retaining lugs (36) bent obliquely outwards and facing the connector centre (3) are each arranged on the bottom (9) of the plug-in connector (1) on both sides of the connector centre (3).

12. Plug-in connection of spacers of an insulating glazing, wherein the plug-in connection (39) has a hollow profile (2) of the spacer and an inserted plug-in connector (1), **characterized in that** the plug-in connector (1) according to any of Claims 1 to 11 is formed.

13. Plug-in connection according to Claim 12, **characterized in that** the hollow profile (2) is in the form of a warm-edge hollow profile.

14. Plug-in connection according to either of Claims 12 and 13, **characterized in that** the hollow profile (2) has a preferably closed circumference with a profile bottom (40), lateral profile walls (42) and a profile top (41).

15. Plug-in connection according to Claim 14, **characterized in that** the hollow profile (2) has a connection region (47) between the profile top (41) and a preferably recessed upper region of the adjacent side wall (42), wherein the resilient retaining elements (19-22) at the free boundary region (14) of the side walls (10) engage preferably multi-axially with the hollow profile (2) at the connection region (47).

## Revendications

1. Connecteur enfichable droit pour profilés creux (2), notamment profilés creux Warm Edge, d'entretoises d'un vitrage isolant, le connecteur enfichable (1) présentant une section transversale essentiellement en forme de U avec des côtés frontaux ouverts (8) et un fond (9) orienté vers l'espace intérieur de vitre en position de montage ainsi que des parois latérales (10) du côté du bord, profilées en section transversale, et un centrage (5), les parois latérales (10) étant respectivement divisées dans la hauteur en plusieurs zones de parois latérales (11, 12, 13) et présentant des éléments de retenue (19-22) sur leur zone de bord libre (14), **caractérisé en ce que** les parois latérales (10) présentent respectivement
- une zone de paroi latérale inférieure (11), se raccordant au fond (9), avec une forme arrondie et évasée,
- une zone de paroi latérale (12) s'y raccordant, rentrant vers le côté intérieur de connecteur, une transition incurvée (17) étant agencée entre la zone de paroi latérale inférieure (11) et la zone de paroi latérale rentrante (12),
- et une zone de paroi latérale verticale (13), se raccordant à la zone de paroi latérale rentrante (12) avec un bord (18), qui présente la zone de bord libre (14) et les éléments de retenue (19-22),
- la zone de paroi latérale inférieure (11) présentant un arrondi doux (15) à la suite du fond (9) et la transition (17) présentant une courbure vive,
- le rayon de courbure (R1) de l'arrondi doux (15) étant plusieurs fois supérieur au rayon de courbure (R2) de la transition (17).

2. Connecteur enfichable selon la revendication 1, **caractérisé en ce que** l'arrondi doux (15) de la zone de paroi latérale inférieure (11) s'étend de manière continue du fond (9) jusqu'à la transition incurvée (17).

3. Connecteur enfichable selon la revendication 1 ou 2, **caractérisé en ce que** la zone de paroi latérale inférieure (11) présente une pièce intermédiaire (16) droite et s'étendant verticalement, notamment perpendiculairement au fond (9), entre l'arrondi doux (15) et la transition (17).

4. Connecteur enfichable selon la revendication 3, **caractérisé en ce que** la longueur d'extension de la pièce intermédiaire droite (16) est nettement inférieure à la longueur d'arc de l'arrondi doux (15).

5. Connecteur enfichable selon l'une quelconque des revendications précédentes, **caractérisé en ce que** la zone de paroi latérale rentrante (12) présente une extension orientée parallèlement ou en oblique par rapport au fond (9) ainsi que, de préférence, droite, la zone de paroi latérale verticale (13) étant de préférence orientée perpendiculairement au fond (9).

6. Connecteur enfichable selon l'une quelconque des revendications précédentes, **caractérisé en ce que** le bord recourbé (18) présente une courbure vive, le rayon de courbure (R3) de l'arrondi doux (15) étant plusieurs fois supérieur au rayon de courbure du bord (18).

7. Connecteur enfichable selon l'une quelconque des revendications précédentes, **caractérisé en ce que** l'arrondi doux (15) présente un angle d'arc d'environ 90°.

8. Connecteur enfichable selon l'une quelconque des revendications 1 à 7, **caractérisé en ce que** plusieurs éléments de retenue élastiques (19-22) sont respectivement alignés les uns derrière les autres dans un axe longitudinal (4) du connecteur enfichable (1) sur la zone de bord libre (14) des parois latérales (10) de part et d'autre du centre de connecteur (3), les éléments de retenue (19-22) étant recourbés latéralement en oblique vers l'extérieur et orientés vers le centre de connecteur (3) et présentant, en vue latérale, une forme de plaque rectangulaire avec un bord avant (26, 27, 28) s'étendant perpendiculairement au fond (9).

9. Connecteur enfichable selon la revendication 9, **caractérisé en ce que** les éléments de retenue (19-22) présentent des bords inférieurs (23, 24, 25) et des bords supérieurs (29, 30, 31) qui s'étendent respectivement de préférence parallèlement au fond (9).

10. Connecteur enfichable selon l'une quelconque des revendications 8 ou 9, **caractérisé en ce que** les éléments de retenue (19-22) agencés respectivement de part et d'autre du centre de connecteur (3) sur les parois latérales (10) présentent un espacement axial et un espace libre (32) entre eux.

11. Connecteur enfichable selon l'une quelconque des revendications 1 à 10, **caractérisé en ce que** sur le fond (9) du connecteur (1), de part et d'autre du centre de connecteur (3), sont agencées respectivement une ou plusieurs languettes de retenue (36) élastiques, recourbées en oblique vers l'extérieur et orientées vers le centre de connecteur (3).

12. Connexion enfichable d'entretoises d'un vitrage isolant, la connexion enfichable (39) présentant un profilé creux (2) de l'entretoise et un connecteur enfichable enfiché (1), **caractérisée en ce que** le connecteur enfichable (1) est réalisé selon l'une quelconque des revendications 1 à 11.

13. Connexion enfichable selon la revendication 12, **caractérisée en ce que** le profilé creux (2) est réalisé sous forme de profilé creux Warm Edge.

14. Connexion enfichable selon l'une quelconque des revendications 12 ou 13, **caractérisée en ce que** le profilé creux (2) présente une périphérie de préférence fermée avec un fond de profilé (40), des parois latérales de profilé (42) et un toit de profilé (41).

15. Connexion enfichable selon la revendication 14, **caractérisée en ce que** le profilé creux (2) présente respectivement une zone de raccordement (47) entre le toit du profilé (41) et une zone supérieure de préférence renfoncée de la paroi latérale (42) adjacente, les éléments de retenue élastiques (19-22) sur la zone de bord libre (14) des parois latérales (10) entrant en prise avec le profilé creux (2) de préférence sur plusieurs axes au niveau de la zone de raccordement (47).
